# EUROPEAN PATENT APPLICATION

(11) **EP 2 522 784 A1**
(43) Date of publication of application: **14.11.2012**
(21) Application number: 11165284.8
(22) Date of filing: 09.05.2011
(51) Int. Cl.: E04B 1/70, E04B 1/64

(54) **A water impervious laminated membrane for use in buildings**

(71) Applicant: Icopal Danmark A/S, 2730 Herlev (DK)
(72) Inventor: Pedersen, Bjarne, 4000, Roskilde (DK)
(74) Representative: Plougmann & Vingtoft A/S

(57) **Abstract**

A water impervious laminated membrane (1) for use in buildings, the laminated membrane comprising a water impervious membrane (10), a covering membrane (30), and a capillary material (20) capable of absorbing water and laminated between the water impervious membrane (10) and the covering membrane (30) and extending along a free edge (11) of the water impervious membrane (10). The water impervious membrane (10) is a single continuous membrane; the capillary material (20) does not overhang the free edge (11) of the water impervious membrane (10); and the covering membrane (30) leaves exposed an edge portion (21, 22) of the capillary material (20) facing the free edge (11) of the water impervious membrane (10) to serve as an entry port for water into the capillary material. Absorbed water is conducted through the capillary material and exits at the opposite edge as drops or it evaporates.

## Description

### FIELD OF THE INVENTION

The invention relates to water impervious membranes used in buildings for preventing water and/or water vapour from entering building structures where water and/or water vapour is undesired. Such building structures are typically made of wood or other material where excessive relative humidity can cause mould and fungus growth and rot.

### BACKGROUND OF THE INVENTION

Brick walls are porous and water can penetrate due e.g. to the capillary effect of the brick material and the mortar between the bricks. Usually, brick walls are double walls with an outer wall and an inner wall with a space between that is more or less filled with an insulating material such as mineral wool. At the inner side of the outer wall drops of water may then run down the wall and eventually arrive at the upper part of a wooden structure such as a window or door frame or possibly also the foundation, which is undesired. To prevent water at the inner side of the outer wall from reaching such building structures or other building elements water blocking elements such as water impervious membranes or metal plates have been inserted above the structure or element which it is desired to keep isolated from the water. Such known water blocking elements may extend through the wall and at the inner side of the wall it extends upwards a distance from the wall so that drops of water on the inner side of the wall will be caught and led through the wall - e.g. through the mortar - and to the outer side of the wall. Other water blocking elements can be in the form of a gutter or channel running parallel to the wall and leading the water away.

However, after such water blocking elements have been put in place several layers of bricks are built on top of the elements, and during this there is a substantial risk of small portions of wet mortar being dropped in the space between the outer and inner walls where it will be caught in the gutter or channel formed by the water blocking elements which may thereby be clotted.

WO 00/37751 discloses a laminated water vapour barrier with two water impervious membranes and a water absorbing material between the two water impervious membranes. Each of the two water impervious membranes is arranged as a plurality of parallel webs with an exposed portion of the water absorbing material between webs. Webs of the two water impervious membranes are overlapping and alternating. One of the two water impervious membranes has a water vapour diffusion resistance which varies in dependency on the relative humidity of air in contact with the membrane, which makes the laminated product suitable for use as a water vapour barrier.

WO 85/00188 discloses a laminated vapour barrier with two vapour-tight layers and a water absorbing layer interposed there between. Both vapour-tight layers have openings exposing the water absorbing layer, and openings in one vapour-tight layer are offset from openings in the other so that they do not overlap.

### SUMMARY OF THE INVENTION

The invention solves this problem by means of a water impervious laminated membrane 1 as defined in the claims. Such a membrane is suitable for being arranged around, e.g. immediately above, at the sides or below, the building structure which it is desired to protect from water. Further, a laminated membrane according to the invention is also useful as a vapour barrier.

The exposed edge portion of the capillary material is intended for being arranged at the inner side of the outer wall, i.e. in the space between the outer wall and the inner wall, and the water impervious membrane should preferably protrude at least to the opposed inner side of the inner wall. The protruding portion of the water impervious membrane should be bent upwards and in contact with the inner wall, and the exposed edge portion of the capillary material, which forms an entry port for water into the capillary material, should be at the lowest point of the water impervious laminated membrane 1 so that any water on the laminated membrane will be led by gravity to the exposed edge portion where the water will be absorbed by the capillary material.

The water impervious laminated membrane 1 should extend above the building structure which it is desired to protect from water and to the outer side of the outer wall and preferably with some overhang beyond that structure to ensure that water leaving the capillary material will drop off the membrane at a distance from the protected structure.

The side of the water impervious membrane opposite the capillary material may optionally have a first zone with a layer of adhesive material for fixing the laminated membrane to an underlying building structure such as the upper surface of a window frame or door frame, and may also have a second zone with an optional layer of adhesive material for fixing the membrane, which protrudes beyond the inner side of the outer wall, to the inner wall.

### BRIEF DESCRIPTION OF THE DRAWINGS

Figure 1 shows a sectional view of a water impervious laminated membrane 1 in accordance with the invention, and
Figure 2 shows the water impervious laminated membrane 1 in figure 1 in an intended use in a wall with an outer brick wall and an inner brick wall.

### DETAILED DESCRIPTION OF THE INVENTION

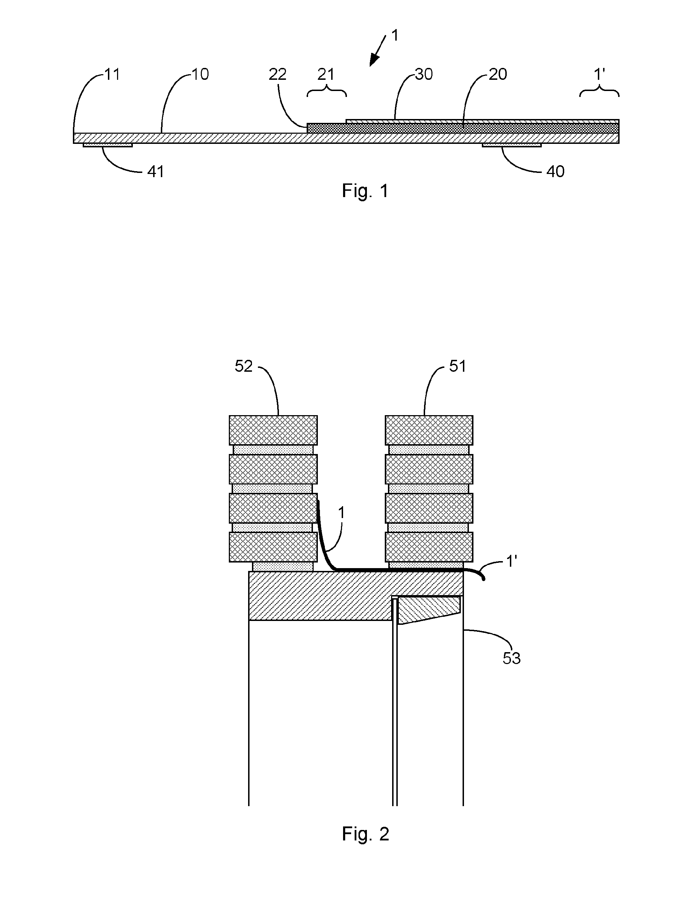

In figure 1 is shown a water impervious laminated membrane 1 having a water impervious membrane 10 which has a free edge 11. The water impervious membrane 10 can be based on, consist of or include any suitable materials such as PE, PP and bitumen and one of its properties is that it is water impervious. On a first side of the water impervious membrane 10 is a layer of capillary material 20 such as felt, tissue or non-woven material having the property of being capable of absorbing and conducting water by its capillary effect. The side of the capillary material 20 facing away from the water impervious membrane 10 carries a covering membrane 30 of any suitable material such as PE or PP. Together the water impervious membrane 10, the layer of capillary material 20 and the covering membrane 30 form a water impervious laminated membrane 1.

The covering membrane 30 leaves exposed an edge portion 21 of the capillary material facing the free edge 11 of the water impervious membrane. As shown, the exposed edge portion 21 may include a portion of the surface of the capillary material 20, but the covering membrane 30 and the capillary material 20 can have the same extension so that the covering membrane 30 extends to the edge of the capillary material 20 leaving only the edge end surface 22 of the capillary material 20 free as an entry port for water. The entry port for water formed by the exposed portion 21 of the surface of the capillary material 20 and/or the edge end surface 22 should have an area large enough to permit anticipated quantities of water to be absorbed by the capillary material 20 through the entry port. Water that has been absorbed through the entry port can be conducted through the capillary material 20 and exit the capillary material at the opposite edge.

In figure 2 is shown a wall with an outer brick wall 51 and an inner brick wall 52 with a window frame or door frame 53 in the wall below the outer and inner brick wall 51 and 52.

The side of the water impervious membrane 10 opposite the capillary material has a first zone 40 with an optional adhesive which is used for fixing the laminated membrane to the structure to be protected from water and preventing it from being displaced when the bricks of the outer brick wall 51 are being laid. The covering membrane 30 serves to protect the capillary material against mortar and rubber-like substances used for closing the space between the window frame and the lowermost layer of bricks form entering the capillary material and clotting it.

Likewise, the same side of the water impervious membrane 10 has a second zone 41 with an optional adhesive which is used for fixing the water impervious membrane 10 to the outer side of the inner brick wall 52 at a location higher than the window frame or door frame 53. This is illustrated in figure 2. Alternatively, this portion of the water impervious membrane 10 may be fixed to the inner brick wall by other means such as nails or by inserting the free edge 11 between two layers of bricks of the inner brick wall 52.

As shown in figure 1, the edge end surface 22 of the capillary material 20 may be at a distance from the free edge 11 of the water impervious membrane 10, which is advantageous since the free portion of the water impervious membrane 10 can then be used for reaching into the space between the outer and inner walls.

In figure 2 is shown that a portion 1' of the water impervious laminated membrane 1 protrudes out from above the window frame 53. Water that has been absorbed by the capillary material and conducted to the protruding portion 1' at the opposite edge, which is on the outside of the outer brick wall 51, will exit the capillary material here as drops or evaporate.

At the portion 1' of the water impervious laminated membrane 1 that protrudes out from above the window frame 53 the water impervious membrane 10 or the covering membrane 30 may protrude beyond the other and also beyond the capillary material 20 whereby such protruding portion can serve as a "curtain" for protecting e.g. a window pane in the window frame against mortar that is spilled when laying the bricks of the wall. Later, the protruding portion 1' of the water impervious membrane 10 can be cut to a suitable size.

A water impervious laminated membrane according to the invention with a cross section e.g. as shown in figure 1 may be manufactured as an endless web to be supplied on rolls. For each individual use a suitable length of the web can be cut from the web corresponding to the width of e.g. a window to be protected from water. There is then no need for manufacturing individual lengths. A water impervious laminated membrane according to the invention can then be fixed to a window or door frame during production of the frame.

## Claims

1. A water impervious laminated membrane (1) for use in buildings, the laminated membrane comprising
- a water impervious membrane (10),
- a covering membrane (30), and
- a capillary material (20) capable of absorbing water, the capillary material (20) being laminated between the water impervious membrane (10) and the covering membrane (30) and extending along a free edge (11) of the water impervious membrane (10),
**characterized in that**
- the water impervious membrane (10) is a single continuous membrane,
- the capillary material (20) does not overhang the free edge (11) of the water impervious membrane (10), and
- the covering membrane (30) leaves exposed an edge portion (21, 22) of the capillary material (20) facing the free edge (11) of the water impervious membrane (10).

2. A laminated membrane according to claim 1 wherein the water impervious membrane (10) has a zone (40, 41) with layer of adhesive on its side facing away from the capillary material (20).

3. A laminated membrane according to any one of the preceding claims in the form of an endless web on a roll.

4. A laminated membrane according to any one of the preceding claims wherein the exposed edge portion (21, 22) of the capillary material (20) includes an edge end surface (22).

5. A laminated membrane according to any one of the preceding claims wherein the exposed edge portion (21, 22) of the capillary material (20) includes a portion (21) of the surface of the capillary material (20).
